# FASCICULE DE BREVET EUROPEEN

(11) **EP 3 371 554 B1**
(45) Date de publication et mention de la délivrance du brevet: **01.01.2020**
(21) Numéro de dépôt: 16806253.7
(22) Date de dépôt: 04.11.2016
(51) Int. Cl.: G01D 5/353

(54) **DISPOSITIF OPTOELECTRONIQUE DE MESURE REPARTIE PAR DIFFUSION BRILLOUIN**
OPTOELEKTRONISCHE VORRICHTUNG ZUR VERTEILTEN MESSUNG MITTELS BRILLOUIN-STREUUNG
OPTOELECTRONIC DEVICE FOR DISTRIBUTED MEASUREMENT BY MEANS OF BRILLOUIN SCATTERING

(30) Priorité: 06.11.2015 FR 1560681
(43) Date de publication de la demande: 12.09.2018
(73) Titulaire: Febus Optics, 64000 Pau (FR)
(72) Inventeur: LANTICQ, Vincent, 64000 Pau (FR)
(74) Mandataire: A.P.I. Conseil
(86) Numéro de dépôt international: PCT/FR2016/052870
(87) Numéro de publication internationale: WO 2017/077257

(56) Documents cités:
- JP-A- 2010 217 029
- DAISUKE LIDA ET AL: "Cost-effective bandwidth-reduced Brillouin optical time domain reflectrometry using a reference Brillouin scattering beam", APPLIED OPTICS, OPTICAL SOCIETY OF AMERICA, WASHINGTON, DC; US, vol. 48, no. 22, 21 juillet 2009 (2009-07-21), pages 4302-4309, XP001547153, ISSN: 0003-6935, DOI: 10.1364/AO.48.004302
- YUGUO YAO ET AL: "Reducing Trade-Off Between Spatial Resolution and Frequency Accuracy in BOTDR Using Cohen's Class Signal Processing Method", IEEE PHOTONICS TECHNOLOGY LETTERS, IEEE SERVICE CENTER, PISCATAWAY, NJ, US, vol. 24, no. 15, 5 juillet 2012 (2012-07-05), pages 1337-1339, XP011451590, ISSN: 1041-1135, DOI: 10.1109/LPT.2012.2203299

## Description

### [Domaine de l'invention]

L'invention concerne un dispositif optoélectronique de mesure répartie par diffusion Brillouin dans une fibre optique utilisant une seule fréquence laser pour générer une impulsion de lumière. Ce type de dispositif est encore dénommé capteur à fibre optique réparti par rétrodiffusion Brillouin.

De tels dispositifs sont utilisés pour le contrôle permanent de l'intégrité et de la sécurité des systèmes et structures dans le génie civil ou l'industrie pétrolière. Ils sont notamment utilisés pour la surveillance des ouvrages linéaires comme les ponts, les barrages, les digues hydrauliques en terre ou les réseaux de transport de fluides (eau, hydrocarbures, gaz) afin de contrôler les mouvements de terrain (glissement, tassement) ou les déformations des conduites enterrées ou non. Une fibre optique est disposée le long d'un ouvrage à surveiller et un signal lumineux est injecté dans ladite fibre. Le signal lumineux rétrodiffusé par la fibre optique permet ensuite d'en déduire l'état structurel de l'ouvrage.

### [Art antérieur]

Ces dispositifs optoélectroniques de mesure répartie par diffusion Brillouin sont plus particulièrement utilisés pour mesurer, en temps réel, la température ou les déformations des infrastructures de grandes tailles afin de surveiller leur santé structurelle et d'assurer leur maintenance. Ils fournissent, à chaque mesure, les informations de température et de déformation en tout point de la fibre optique qui leur est raccordée. Les mesures sont généralement réalisées avec une portée de quelques mètres à plusieurs dizaines de kilomètres et une résolution métrique voire centimétrique. Ainsi, par exemple, une mesure peut être réalisée tous les mètres sur un ouvrage d'une longueur de 20 kilomètres.

Des tels dispositifs exploitant le phénomène de rétrodiffusion Brillouin sont déjà connus et utilisés pour des applications de mesures de température et de déformation dans le génie civil.

La fréquence Brillouin v_{B}, dépend linéairement de la température et de la déformation dans le matériau. Le décalage fréquentiel Δv_{B} entre l'onde incidente et l'onde rétrodiffusée varie donc avec les variations de température ΔT et de déformation ε suivant l'équation : Δv_{B} = C_{T}ΔT + C_{ε}ε, où C_{T} et C_{ε} sont respectivement les coefficients de sensibilité de température et de déformation propres à la fibre optique utilisée. A la longueur d'onde λ0 = 1550 nm et pour une fibre standard telle que définie par la norme ITU-G652 (comme par exemple les fibres Coring® - SMF-28 ™), les coefficients sont de l'ordre de C_{T} ≈ 1MHz/°C et C_{ε}≈0.05MHz/µε.

Pour pouvoir analyser des variations d'intensité sur des dizaines de kilomètres avec une résolution spatiale métrique, les systèmes de mesure utilisent en général la réflectométrie optique temporelle OTDR (de l'acronyme anglais « Optical Time Domain Reflectometry »). L'OTDR consiste à propager une impulsion lumineuse dans la fibre optique à analyser et à mesurer l'intensité retour en fonction du temps. Le temps que met la lumière rétrodiffusée à être détectée permet de localiser l'événement à mesurer (coordonnée d'un point z le long de la fibre optique). La résolution spatiale est alors fonction de la largeur de l'impulsion lumineuse : une impulsion de largeur 10 ns entrainant par exemple une résolution d'environ 1 m.

Grâce au phénomène de rétrodiffusion Brillouin combiné à la technique de l'OTDR, on réalise des mesures de température et de déformation réparties tout le long de la fibre, sur plusieurs dizaines de kilomètres, avec une résolution métrique voire centimétrique.

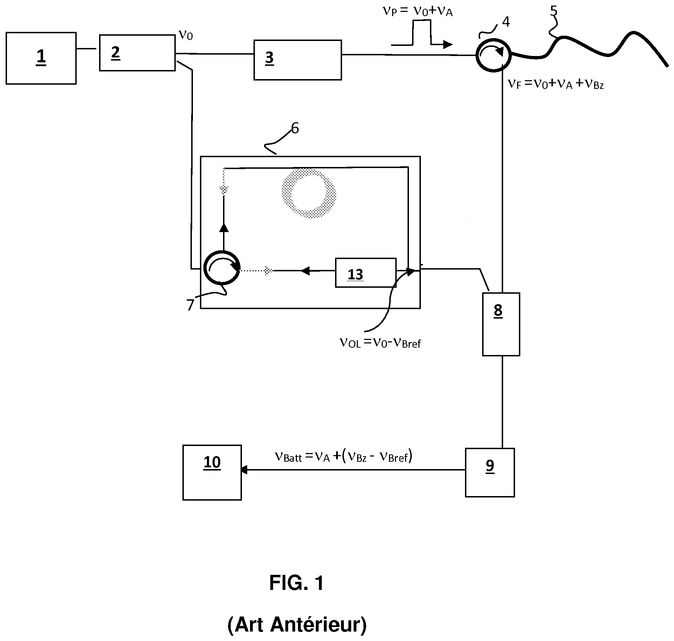

Les mesures le long de la fibre sont effectuées avec un dispositif tel que schématisé sur la Figure 1. La lumière issue d'une source lumineuse 1, tel qu'un laser, est répartie dans deux bras. L'un des bras, appelé « pompe », permet d'envoyer le signal lumineux, sous forme impulsionnelle grâce à un modulateur acousto-optique 3, dans la fibre optique 5 à tester. Un signal est rétrodiffusé par la fibre 5, selon le phénomène Brillouin. Selon le phénomène Brillouin, les composantes spectrales de rétrodiffusion de la lumière par le matériau de constitution de la fibre optique, en général de la silice, présentent une fréquence vB_{z} décalée de celle v0 de l'onde lumineuse incidente. Le décalage fréquentiel Brillouin est en général de l'ordre de 11 GHz pour une onde incidente de longueur d'onde λ0 = 1550nm. Une telle fréquence est très élevée. Pour pouvoir effectuer le traitement sur le signal rétrodiffusé on peut transposer la fréquence à une plus basse fréquence pour réduire la bande passante du détecteur à utiliser et ainsi éliminer une grande partie du bruit. Pour cela on procède à une détection hétérodyne tel que décrit par exemple dans le document US 7 283 216. La détection hétérodyne consiste à recombiner le signal rétrodiffusé à analyser avec une onde provenant de l'autre bras, appelé « oscillateur local » 6. Cet oscillateur local 6 peut par exemple se présenter sous la forme d'un laser en anneau Brillouin. Dans ce cas, le signal lumineux continu de fréquence vo est dirigé vers un circulateur 7 qui le dirige à son tour vers une fibre de référence. Cette fibre de référence émet par diffusion spontanée amplifiée un rayonnement en sens inverse de fréquence v₀ - v_{Bref} que le circulateur envoie vers un coupleur 13. Ce dernier envoie une partie de l'énergie vers le signal de sortie, tandis qu'il redirige l'autre partie vers la fibre de référence où le rayonnement est amplifié d'un facteur de gain G par diffusion Brillouin stimulée avant d'être redirigé vers le circulateur 7 qui renvoie le rayonnement amplifié vers le coupleur 13 et la sortie. L'oscillateur local 6 forme alors un anneau d'amplification par diffusion Brillouin stimulée. Un photo-détecteur 9 permet de récupérer le battement des deux signaux. Le battement récupéré est ensuite amplifié puis transmis à un analyseur 10 de spectre électrique.

Un tel dispositif optoélectronique de mesure répartie par diffusion Brillouin dans une fibre optique, utilisant une seule fréquence laser pour générer une impulsion de lumière, est plus particulièrement décrit dans le document US 7 283 216. Le dispositif selon ce document permet d'effectuer, en temps réel, des mesures simultanées de température et de contraintes. Un détecteur hétérodyne permet de récupérer le battement, entre le signal issu de l'oscillateur local et le signal rétrodiffusé par la fibre à analyser, qui se situe dans une bande de fréquences exploitable par un récepteur analogique. L'oscillateur local utilisé dans ce document est formé par un laser en anneau Brillouin et impose que le circuit soit cohérent, c'est-à-dire que l'onde retour soit en phase avec l'onde incidente. La longueur de la fibre de référence et la fréquence laser doivent donc être contrôlées et ajustées de manière à ce que la cavité de l'oscillateur local fournisse la bonne fréquence v0 pour permettre de transposer la fréquence, du signal rétrodiffusé par la fibre à tester, à une plus basse fréquence. Le dispositif décrit dans ce document est donc complexe à mettre en œuvre car il nécessite des contrôles préalables pour ne pas créer de perturbations sur le signal retour. De plus, la détection est une détection hétérodyne analogique, nécessitant l'utilisation de composants électroniques analogiques relativement encombrants et consommateurs d'énergie.

Le document CA 2 274 505 décrit un dispositif et un procédé pour mesurer avec précision et simultanément les variations de température et les contraintes tout le long d'une fibre optique, elle-même disposée le long d'un ouvrage dont la structure est à surveiller. Le dispositif décrit est cependant complexe à mettre en œuvre. En effet l'analyse du signal détecté est complexe car elle tient compte non seulement du phénomène de rétrodiffusion Brillouin mais aussi d'un autre phénomène de rétrodiffusion Rayleigh. Un détecteur optique comprenant un filtre optique à balayage permet de résoudre des pics de Rayleigh et des pics de Brillouin et de convertir les signaux optiques en signaux électriques, lesquels sont ensuite traités par un moyen de traitement analogique. La mesure de la température et de la contrainte en tout point le long de la fibre, revient à déterminer la vitesse de balayage du filtre optique, plus lente que la vitesse de répétition des impulsions optiques, à mesurer l'amplitude et la fréquence des raies Brillouin par rapport aux raies Rayleigh en fonction du temps, puis à établir une comparaison par rapport à une fibre de référence. De plus, le dispositif décrit dans ce document effectue une détection optique directe et non une détection hétérodyne. En outre, un tel dispositif procure une faible résolution en fréquence induite par l'utilisation d'un filtre optique à balayage.

Il arrive fréquemment que les ouvrages de génie civil, dont la structure est à analyser, soient isolés de toute activité humaine et donc, de tout réseau électrique. Dans ce cas, afin de surveiller tout ou partie de l'ouvrage, un système de mesure autonome en énergie est nécessaire. Les dispositifs existant de mesure répartie par diffusion Brillouin ne permettent pas un fonctionnement autonome et faiblement consommateur d'énergie. Ils doivent donc être disposés à proximité de locaux techniques souvent distants les uns des autres de plusieurs centaines de kilomètres. Cette distance étant supérieure à la portée maximale de ces dispositifs, une partie des ouvrages de génie civil ne peut alors pas être surveillée en continu par les dispositifs existant de mesure répartie par diffusion Brillouin.

De plus un autre inconvénient des systèmes existant est la durée des mesures car cette durée est longue. En effet, typiquement, la durée de mesure est supérieure à 1 minute pour une fibre de 10Km.

Le document JP 2010 217029 A (D1) est considéré comme l'état de la technique le plus proche. Cependant ce document décrit un procédé de traitement différent du procédé proposé dans la présente invention. Le procédé proposé dans la présente invention repose sur un principe différent qui permet d'optimiser le temps de calcul par rapport à la meilleure résolution spatiale possible.

### [Problème technique]

L'invention a donc pour but de remédier aux inconvénients de l'art antérieur. L'invention vise notamment à proposer un dispositif optoélectronique de mesure répartie par diffusion Brillouin, simple et peu encombrant, dont la configuration optoélectronique permet une réduction significative de la consommation d'énergie électrique par rapport aux dispositifs existants, de sorte qu'il puisse être alimenté en basse tension, typiquement en 12 ou 24 Volts, à partir d'une batterie par exemple.

Le dispositif proposé selon l'invention comporte moins d'éléments que les systèmes existants décrits ci-dessus et il est autonome en énergie ce qui permet d'avoir un dispositif portable adapté à des interventions par un opérateur à pieds ou à des mesures occasionnelles. De plus, le dispositif met en œuvre un traitement numérique des signaux dès la sortie du photo-détecteur. Le traitement du signal qui suit se fait numériquement au niveau spectral et non directement sur le signal. Ainsi, la durée d'une mesure est courte relativement à la durée de mesure des systèmes de l'art antérieur. Typiquement la durée d'une mesure est de 1 à quelques secondes pour une fibre de 10Km.

Ainsi, selon l'invention, le procédé de traitement numérique permet de traiter le signal issu dudit dispositif optoélectronique de mesure répartie par diffusion Brillouin et comprend des étapes nécessaires pour le calcul des valeurs de température ou de déformation par rapport à l'endroit le long de la fibre optique à tester. Ce traitement est effectué à partir du signal détecté par le photo-détecteur du dispositif optoélectronique et comprend notamment la réalisation d'un découpage du signal numérisé en pluralité de tronçons dont la largeur est égale à la largeur temporelle d'une demi impulsion du signal impulsionnel injecté dans la fibre optique à tester.

### [Brève description de l'invention]

L'invention a pour objet un procédé de traitement numérique d'un signal issu d'un dispositif optoélectronique de mesure répartie par diffusion Brillouin comprenant une source de lumière (1) continue émettant un signal lumineux continu à une première fréquence vo, un coupleur (2) apte à diviser ledit signal lumineux continu en deux signaux identiques répartis dans deux bras, le premier bras comprenant un dispositif générateur d'impulsions décalées en fréquence (30) comprenant au moins un modulateur acousto-optique (3) apte à transformer ledit signal continu en un signal impulsionnel, de fréquence vp, destiné à être injecté dans une fibre optique (5) à tester pour qu'elle émette en retour un signal par rétrodiffusion Brillouin spontanée à une fréquence vF égale à vp - vBz, où vBz est la fréquence Brillouin à mesurer en tout point z de ladite fibre optique (5), et le deuxième bras formant un oscillateur local (16) émettant un autre signal lumineux destiné à être mélangé audit signal retour émis par rétrodiffusion Brillouin par ladite fibre optique (5) à tester pour permettre un abaissement de la fréquence dudit signal retour, de manière à ce qu'un module de détection (9) puisse détecter ladite fréquence de décalage Brillouin vBz en tout point z de ladite fibre optique et qu'un module de traitement (12) puisse relier cette fréquence de décalage Brillouin vBz en tout point z de ladite fibre optique à une valeur de température et une valeur de déformation, **dans lequel** l'oscillateur local (16) comprend une fibre optique de référence (18) ayant une fréquence de Brillouin identique ou proche de celle de la fibre optique (5) à tester, ladite fibre optique de référence (18) émettant un signal par rétrodiffusion Brillouin spontanée, en réponse audit signal lumineux continu émis dans ledit deuxième bras par ladite source lumineuse (1), ledit signal de rétrodiffusion Brillouin étant émis à une fréquence VOL= v0 - v_{BRef}, où v_{BRef} est la fréquence de Brillouin de la fibre de référence sans déformation et à une température de référence ; **caractérisé en ce que le procédé comporte les étapes suivantes** :
a) numériser un signal correspondant au battement entre un signal rétrodiffusé issu de la fibre optique (5) à tester et un signal rétrodiffusé issu de la fibre optique (18) de référence, et détecté par un photo-détecteur (9),
b) découper ledit signal numérisé en une pluralité de tronçons (T1...Ti...TN) par application d'une fenêtre temporelle glissante de type fenêtre rectangulaire ou de Hamming, ou de Hann ou de Blackman-Harris, chaque tronçon présentant une largeur égale à la largeur temporelle d'une demi impulsion du signal impulsionnel injecté dans la fibre optique (5) à tester, la largeur de chaque tronçon étant en outre centrée autour d'une date t correspondant à un point de coordonnée z de ladite fibre optique (5) à tester,
c) calculer, par utilisation d'un algorithme de transformée de Fourier rapide FFT, le spectre fréquentiel de chaque tronçon (T1 ...Ti...TN) dudit signal numérisé;
d) répéter les étapes a), b) et c) et moyenner les spectres obtenus pour chaque point z de ladite fibre optique à tester ;
e) à l'aide des résultats obtenus à l'étape précédente, tracer un graphe de la variation de fréquence répartie mesurée en fonction du temps aller et retour tz de rétrodiffusion,
f) appliquer un coefficient de sensibilité à la température d'une part et un coefficient de sensibilité à la déformation d'autre part, sur ledit graphe obtenu de variation de fréquence répartie mesurée, afin d'obtenir respectivement un résultat en termes de mesure répartie en température ou un résultat en termes de mesure répartie en déformation.

### Selon d'autres caractéristiques du procédé :

- Avantageusement le traitement numérique est réalisé par un processeur graphique de type GPU (*Graphical Processing Unit*), car cet algorithme est hautement parallélisable à savoir que le même calcul est réalisé de nombreuses fois sur des portions différentes de signal.
- la fibre optique de référence utilisée a une fréquence de Brillouin identique ou une fréquence proche de celle de la fibre optique à tester à savoir présentant un écart de fréquence, inférieur à 50MHz et de façon préféré un écart inférieur à 20MHz.
- la bande passante du battement est limitée à moins de 1GHz, de préférence à moins de 500 MHz, et de préférence dans une bande centrée autour de 200MHz, par un photo-détecteur, capable de détecter ledit battement entre le signal rétrodiffusé issu de la fibre optique à tester et le signal rétrodiffusé issu de la fibre optique (18) de référence,
- le signal numérisé est le signal de battement détecté par ledit photo-détecteur, la numérisation étant faite par un convertisseur analogique - numérique
- le bruit d'intensité optique apporté par la diffusion Brillouin dans la fibre de référence est éliminé par un filtre électrique basse fréquence disposé entre le coupleur et le photo- détecteur.
- les impulsions sont décalées en fréquence par un décalage de fréquence supérieur à 100MHz et de préférence un décalage de 200MHz à 300MHz réalisé par le modulateur acousto-optique.
- le dispositif optoélectronique de mesure répartie par diffusion Brillouin étant embarqué, son alimentation est une alimentation en basse tension, typiquement en 12 ou 24 Volts, à partir d'une batterie.
- le dispositif réalise un filtrage optique passe bande de 10GHz ou moins de 10GHz en sortie de l'oscillateur local afin de laisser passer uniquement la fréquence v0 - vBref.
- le dispositif permet en sortie de l'oscillateur local, un brouillage de polarisation, suivi d'une atténuation variable permettant de fixer le niveau de signal de l'oscillateur local.

A cet effet, le dispositif optoélectronique de mesure répartie par diffusion Brillouin utilisé, comprend une source de lumière continue émettant un signal lumineux continu à une première fréquence vo, un coupleur apte à diviser ledit signal lumineux continu en deux signaux identiques répartis dans deux bras, le premier bras comprenant un dispositif générateur d'impulsions décalées en fréquence comportant au moins un modulateur acousto-optique apte à transformer ledit signal continu en un signal impulsionnel, de fréquence vp, destiné à être injecté dans une fibre optique à tester pour qu'elle émette en retour un signal par rétrodiffusion Brillouin spontanée à une fréquence vF égale à vp - vB_{z}, où vB_{z} est la fréquence Brillouin à mesurer en tout point z de ladite fibre optique, et le deuxième bras formant un oscillateur local émettant un autre signal lumineux destiné à être mélangé audit signal retour émis par rétrodiffusion Brillouin par ladite fibre optique à tester pour permettre un abaissement de la fréquence dudit signal retour, de manière à ce qu'un module de détection puisse détecter ladite fréquence de décalage Brillouin vB_{z} en tout point z de ladite fibre optique et qu'un module de traitement puisse relier cette fréquence de décalage Brillouin vB_{z} en tout point z de ladite fibre optique à une valeur de température et une valeur de déformation . L'oscillateur local dudit dispositif comprend une fibre optique de référence ayant une fréquence de Brillouin identique ou proche de celle de la fibre optique à tester, ladite fibre optique de référence émettant un signal par rétrodiffusion Brillouin spontanée, en réponse audit signal lumineux continu émis dans ledit deuxième bras par ladite source lumineuse, ledit signal de rétrodiffusion Brillouin étant émis à une fréquence VOL = v₀ - v_{BRef}, où v_{BRef} est la fréquence de Brillouin de la fibre de référence sans déformation et à une température de référence.

Ainsi, le dispositif utilisé permet de s'affranchir de tous les contrôles préalables nécessaires lorsque l'on utilise un oscillateur local présentant une configuration de laser en anneau Brillouin. En effet, dans la configuration selon l'invention, le signal retour émis par la fibre de référence est un signal de diffusion spontanée amplifiée, et non le produit d'une résonnance dans une cavité de type laser (qui dépendrait fortement de la longueur exacte de la cavité, difficile à maitriser en fonction de paramètres d'influence comme la température).

Selon d'autres caractéristiques optionnelles du dispositif :
- la fibre optique de référence a une fréquence de Brillouin identique ou une fréquence proche de celle de la fibre optique à tester à savoir présentant un écart de fréquence, inférieur à 50MHz et de façon préféré un écart inférieur à 20MHz.
- le dispositif selon l'invention comporte en outre :
   - un coupleur à au moins deux entrées pour recevoir le signal rétrodiffusé en sortie du circulateur et le signal provenant de l'oscillateur local et réaliser leur mélange,
   - un brouilleur de polarisation disposé en amont des entrées du coupleur, le module de détection comprend d'une part un photo-détecteur limitant la bande passante à moins de 1 GHz, de préférence à moins de 500 MHz, et de préférence dans une bande centrée autour de 200MHz, capable de détecter un battement entre le signal rétrodiffusé issu de la fibre optique à tester et le signal rétrodiffusé issu de la fibre optique de référence, et un convertisseur analogique - numérique apte à numériser ledit battement détecté par ledit photo-détecteur.
- le dispositif comprend également un filtre électrique basse fréquence disposé aprés le photo-détecteur. Ce filtre permet de diminuer le bruit basse fréquence et ainsi améliorer le rapport signal à bruit,
- le modulateur acousto-optique avec décalage de fréquence supérieur à 100MHz et de préférence un décalage de 200MHtz à 300 MHz.
- le module de traitement est un module de traitement numérique apte à utiliser un algorithme de transformée de Fourier rapide (FFT) pour calculer la fréquence de Brillouin en tout point z de ladite fibre optique à tester, puis à moyenner les spectres obtenus dans le domaine fréquentiel pour chaque point z de ladite fibre afin de déterminer la mesure répartie de la variation fréquentielle tout le long de ladite fibre.
- Avantageusement le dispositif est embarqué et alimenté en basse tension, typiquement en 12 ou 24 Volts, à partir d'une batterie. Le dispositif est ainsi aisément portable et peut être utilisé pour des opérations effectuées par des opérateurs à pieds ou des mesures occasionnelles.

D'autres avantages et caractéristiques de l'invention apparaitront à la lecture de la description suivante donnée à titre d'exemple illustratif et non limitatif, en référence aux Figures annexées qui représentent :
- La Figure 1, déjà décrite, un schéma d'un dispositif optoélectronique de mesure répartie par rétrodiffusion Brillouin selon l'art antérieur,
- La Figure 2, un schéma d'un dispositif optoélectronique de mesure répartie par rétrodiffusion Brillouin selon l'invention,
- Les Figures 3A à 3E, des traces temporelles ou spectrales obtenues à chaque étape du procédé de traitement numérique du signal numérisé, obtenu après recombinaison des signaux rétrodiffusés par la fibre optique sous test et par la fibre optique de référence.
- Les Figures 4A à 4C présentent des mesures réelles réalisées à partir du dispositif de l'invention,
- La Figure 5 présente l'ensemble des spectres de diffusion Brillouin sur une fibre de longueur d'environ 250m.
- La Figure 6 présente le résultat de mesure répartie, i.e. l'ensemble des maxima des spectres de la figure 5.
- La figure 7 représente le spectre de rétrodiffusion de la fibre à tester 5,
- La figure 8 représente le spectre de rétrodiffusion de l'oscillateur local (OL) 16, avec illustration d'un filtrage avec un filtre optique de bande inférieure inférieur à 10GHz,
- La figure 9 représente le spectre du battement entre le signal rétrodiffusé provenant de l'oscillateur local 16 et le signal rétrodiffusé de la fibre à tester 5.

### [Description détaillée de l'invention]

On désigne par fibre à tester (ou sous test) dans la suite, la fibre optique disposée le long d'un ouvrage à surveiller et qui permet de réaliser une mesure répartie.

On entend par fibre de référence, une fibre ayant une fréquence de Brillouin identique ou proche de la fréquence de Brillouin de la fibre test. Le terme fibre à fréquence de Brillouin proche désigne une fibre dont la fréquence de Brillouin présente un écart de fréquence avec la fréquence de Brillouin de la fibre test, inférieur à 50MHz et de façon préféré un écart inférieur à 20MHz.

On entend par durée d'une mesure le temps nécessaire au système pour afficher une mesure à la précision nominale (en termes de déformation ou température). Cette durée inclut à la fois :
- le temps d'acquisition,
- le temps de calcul du système (Transformées de fourrier, moyennages...)

La présente invention se rapporte d'une façon générale aux dispositifs optoélectroniques de mesure répartie par diffusion Brillouin dans une fibre optique. L'invention concerne plus précisément une configuration optoélectronique du dispositif permettant de diminuer sa consommation électrique et de réduire son encombrement.

L'utilisation des mesures renvoyées par ce dispositif est consacrée à l'optimisation de la maintenance d'ouvrages de génie-civil. La continuité des mesures le long de la fibre optique garantie la détection d'un évènement qui ne l'aurait pas été par un autre procédé utilisant des mesures ponctuelles et localisées. La détection précoce des désordres structuraux dans des ouvrages de génie civil permet une intervention avant une dégradation plus importante. A l'inverse, l'absence de détection peut permettre de retarder les opérations de maintenance systématique si elles ne sont pas nécessaires. Dans les deux cas, un tel dispositif optoélectronique de mesure répartie par rétrodiffusion Brillouin permet à un exploitant de réaliser des économies significatives sur la maintenance des ouvrages de génie-civil.

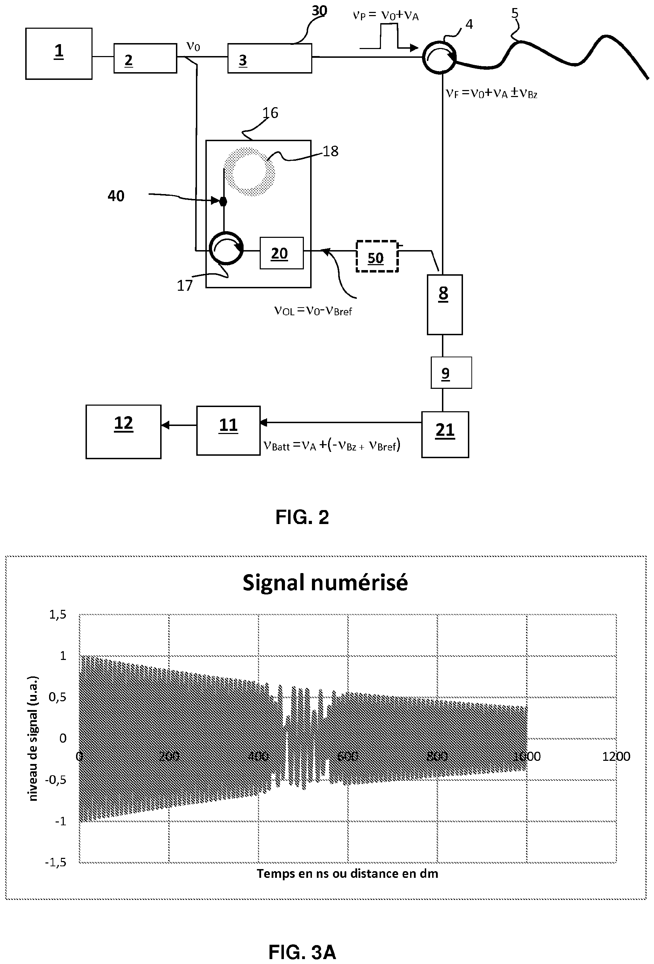

La Figure 2 schématise plus particulièrement la configuration d'un tel dispositif optoélectronique de mesure répartie par diffusion Brillouin dans une fibre optique, selon l'invention. Les mêmes références que sur la Figure 1 sont utilisées pour désigner les mêmes éléments. Le dispositif selon l'invention comprend également une source lumineuse 1 émettant un signal lumineux continu. Cette source de lumière 1 est avantageusement matérialisée par un laser, de préférence un laser DFB (de l'acronyme anglais « Distributed Feedback »), utilisant un réseau de Bragg. La longueur d'onde d'émission λ₀ est de préférence égale à 1550nm, à la fréquence correspondante vo. La raie de l'onde lumineuse émise est centrée sur la longueur d'onde d'émission λ₀ et sa largeur est au plus de 1 MHz. Le laser 1 émet un signal lumineux continu moyennement puissant, typiquement de l'ordre de 20mW, dans une fibre optique le reliant au coupleur 2. Le coupleur 2 permet de diviser le signal lumineux incident émis par le laser 1, en deux signaux identiques répartis dans deux bras du dispositif.

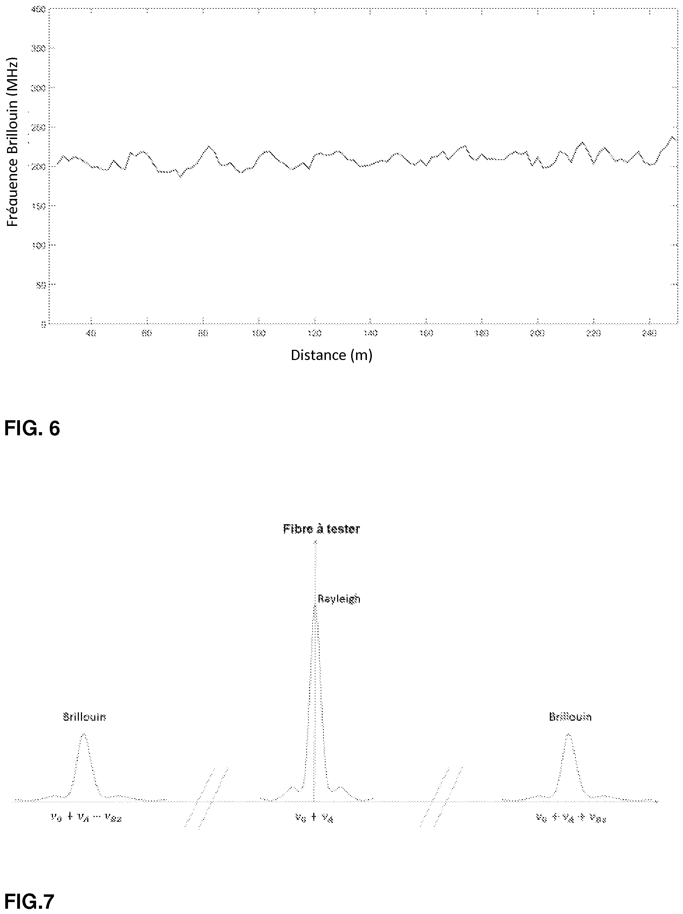

Le premier bras, encore dénommé « pompe », comprend un dispositif générateur d'impulsions décalées en fréquence 30. Ce dispositif 30 comporte au moins un modulateur acousto-optique 3. Il peut comporter également un ou plusieurs amplificateurs si nécessaire pour donner du gain. Le modulateur 3 acousto-optique transforme le signal continu de fréquence vo en un signal impulsionnel de fréquence vₚ = v₀ + v_{A}, où v_{A} est la fréquence propre au modulateur 3, et est généralement supérieure ou égale à 100 et inférieure ou égale à 500 MHz, de préférence de l'ordre de 200MHz. La largeur temporelle de l'impulsion ainsi générée est comprise entre 10ns et 50ns, de préférence elle est de 20ns. Le signal impulsionnel est alors dirigé vers un circulateur 4 qui l'injecte ensuite dans la fibre optique 5 à tester, sur laquelle doit être effectuée la mesure répartie. Au passage du signal impulsionnel, la fibre optique 5 émet en sens inverse un signal par rétrodiffusion Brillouin spontanée à la fréquence v_{F} = v₀ + v_{A} + v_{Bz} ; et v₀ + v_{A} - v_{Bz} dans lequel v_{Bz} est la fréquence Brillouin à mesurer en tout point de coordonnée z le long de la fibre optique 5. Le schéma de la figure 7 illustre le spectre de rétrodiffusion de la fibre à tester 5. Ce signal rétrodiffusé est dirigé par le circulateur 4 vers le coupleur 8 où il est recombiné avec un signal provenant de l'oscillateur local formant le deuxième bras du dispositif.

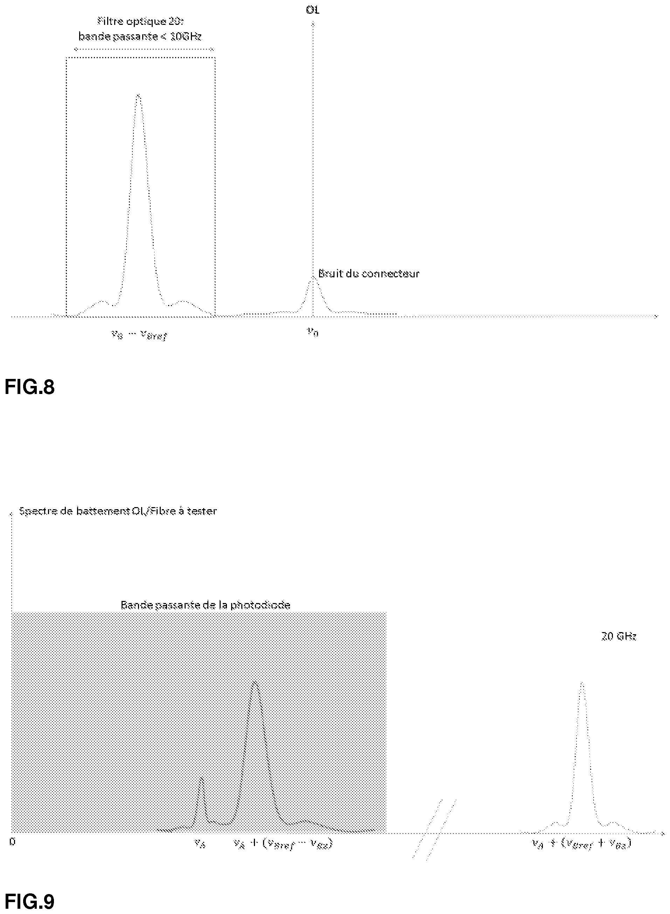

L'oscillateur local 16, comprend avantageusement un circulateur 17 qui dirige le signal lumineux continu incident, à la fréquence vo, provenant du laser 1, dans une fibre optique 18 de référence. Cette fibre optique de référence 18 est avantageusement identique à la fibre optique 5 sous test. La fibre de référence 18 n'est soumise à aucune déformation. Elle est placée à une température de référence, en général comprise entre 18 et 25°C, de préférence à une température de l'ordre de 20°C. Cette fibre de référence 18 permet elle aussi d'émettre un signal par rétrodiffusion Brillouin en réponse au signal continu émanant de la source lumineuse 1, de sorte que l'oscillateur local 16 permet de transformer la fréquence incidente vo en une fréquence VOL = v₀-v_{Bref}, où v_{Bref} représente la fréquence Brillouin de la fibre optique 18 de référence, et qui se situe dans la même gamme de fréquence que la fréquence v_{Bz} issue du signal rétrodiffusé par la fibre optique 5 en test. Le spectre de rétrodiffusion de l'oscillateur local (OL) 16, avec illustration d'un filtrage avec un filtre optique de bande inférieure inférieur à 10GHz est illustré sur le schéma de la figure 8. On voit également sur cette figure 8, le spectre du bruit à v0 du connecteur 40 schématisé sur la figure 2. La fréquence Brillouin de la fibre optique de référence 18 se situe donc dans une gamme de fréquence autour de 11 GHz, en général entre 10,5 et 11,5 GHz. Le circulateur 17 de l'oscillateur local 16 envoi alors le signal rétrodiffusé vers le coupleur 8 pour le mélanger avec le signal rétrodiffusé en provenance de la fibre optique 5 sous test. Avantageusement, on prévoit en outre, en sortie du circulateur, un filtre optique 20, passe bande de 10GHz ou moins de 10GHz permettant de laisser passer uniquement la fréquence v₀ - v_{Bref} et de couper la fréquence vo afin d'éviter le battement entre la diffusion Rayleigh dans la fibre sous test à v₀ + v_{A} et la faible réflexion la fréquence vo sur la connexion symbolisée par la référence 40 sur la figure 2, entre la fibre de référence 18 et le dispositif. Cela permet donc d'éliminer une source de bruit Ce filtre optique 20 est optionnel. En effet, une soudure optique pour réaliser la connexion 40 peut diminuer également ce bruit, mais de fait élimine la possibilité de changer la fibre de référence et donc de faire varier la fréquence v_{Bref}.

Les signaux issus de la fibre optique 5 sous test et de la fibre optique de référence 18 sont donc recombinés dans le coupleur 8. A la sortie du coupleur 8, on obtient un signal qui contient un battement entre le signal provenant de la fibre optique 5 sous test et de la fibre optique de référence 18 de l'oscillateur local 16. La figure 9 représente le spectre du battement entre le signal rétrodiffusé provenant de l'oscillateur local 16 et le signal rétrodiffusé provenant de la fibre à tester 5. Ce battement, de plus basse fréquence, est détectable électroniquement grâce à l'utilisation d'un photo-détecteur 9, de bande passante inférieure à 1GHz, de préférence 500MHz. En sortie du photo-détecteur 9 on obtient donc un signal électrique correspondant au battement détecté à la fréquence de v_{Batt} = v_{A}+(±v_{Bz} + v_{Bref}). Le battement présente une fréquence plus faible que les signaux incidents du fait que la fréquence vo issue de la source lumineuse 1 est éliminée. Typiquement, le battement présente une fréquence inférieure à 500MHz, et de préférence autour de 200MHz, correspondant à l'ordre de grandeur de la fréquence propre au modulateur acousto-optique 3. Ainsi, v_{A}+(+v_{Bz} + v_{Bref}) est à environs 20GHZ et donc hors bande, le battement de plus basse fréquence v_{A} +(v_{Bref} - v_{Bz}) est dans la bande 200 MHz et est exploité dans la suite du traitement.

Avantageusement, - le dispositif comprend également un filtre électrique 21 basse fréquence disposé après le photo-détecteur (photo diode). Ce filtre permet de diminuer le bruit basse fréquence et ainsi améliorer le rapport signal à bruit.

Le signal de battement obtenu est alors numérisé, au moyen d'un module convertisseur analogique - numérique 11. Puis il est traité par un module 12 de traitement numérique.

La configuration avantageuse de l'oscillateur local 16 selon l'invention permet de s'affranchir de tous les contrôles préalables nécessaires lorsque l'on utilise un laser en anneau Brillouin afin d'éviter des perturbations sur le signal (par instabilité de cavité laser). Il permet en outre de réduire la fréquence à détecter par le photo-détecteur à moins de 500MHz, et plus particulièrement dans une bande de fréquences centrée autour de 200 MHz. La configuration optique permet donc d'augmenter le rendement du photo-détecteur 9 en limitant la bande passante à moins de 1 GHz au lieu de 11GHz, de préférence à 500 MHz.

Le module 12 de traitement numérique, quant à lui, utilise avantageusement un algorithme de transformé de fourrier rapide FFT, au moyen par exemple d'un circuit intégré logique connu sous l'acronyme anglais FPGA (pour « Field Programmable gate array »). Il permet ainsi de calculer directement la fréquence Brillouin en tout point de coordonnée z de la fibre optique 5 sous test. Le module 12 de traitement numérique permet en outre de moyenner les spectres obtenus dans le domaine fréquentiel, pour chaque point z de ladite fibre, à l'issue de l'application de l'algorithme de transformée de fourrier rapide FFT, afin de déterminer la mesure répartie de la variation fréquentielle tout le long de ladite fibre optique 5 sous test.

Dans une variante de réalisation, on peut prévoir, en sortie de l'oscillateur local 16, un brouilleur de polarisation, suivi d'un atténuateur variable permettant d'éliminer la sensibilité du dispositif à la polarisation et de fixer le niveau de signal de l'oscillateur local afin de s'adapter au mieux à la sensibilité de la photodiode. Le brouilleur de polarisation et l'atténuateur sont symbolisés par le bloc 50 représenté en pointillé.

Les différentes étapes du traitement numérique effectué sur le signal numérisé, sont plus particulièrement illustrées par les Figures 3A à 3E expérimentales et explicatives qui représentent des traces temporelles ou spectrales obtenues à chaque étape du procédé de traitement numérique du signal numérisé, obtenu après recombinaison des signaux rétrodiffusés par la fibre optique sous test et par la fibre optique de référence.

La Figure 3A représente le signal numérisé en sortie du convertisseur analogique - numérique 11.

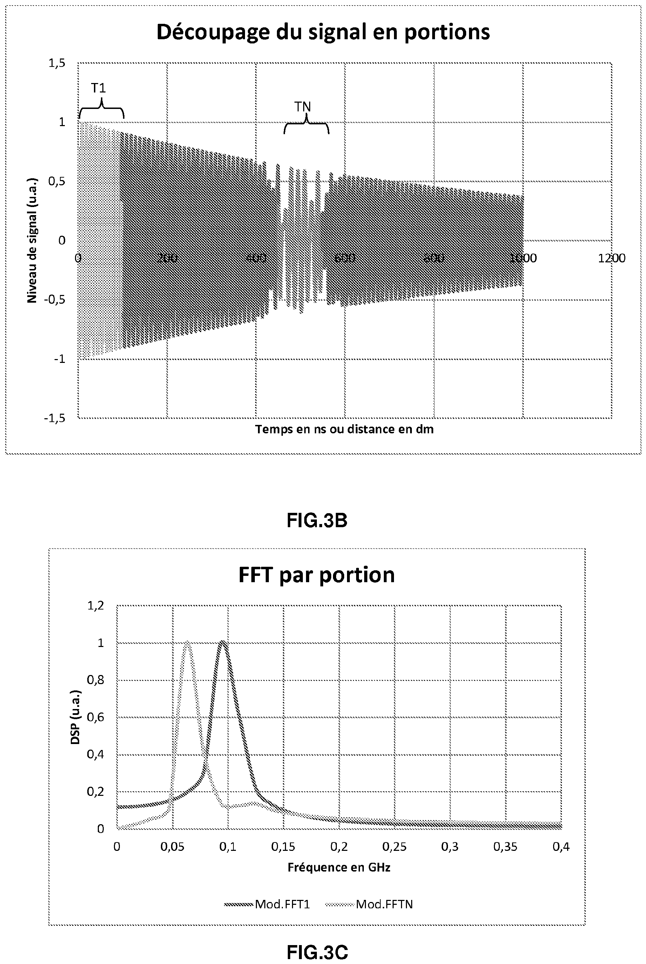

Une première étape du traitement numérique effectué par le module de traitement numérique 12, consiste à découper le signal numérisé en tronçons. Le découpage en tronçon est réalisé par application d'une fenêtre temporelle glissante sur le signal. De préférence le fenêtrage est réalisé par une fenêtre rectangulaire ou de Hamming ou de Hann ou de Blackman-Harris. Le découpage du signal numérisé est représenté sur la Figure 3B, un premier tronçon à traiter étant repéré par la référence T1 et le tronçon N, dans lequel se situe la zone de l'évènement à mesurer, étant repéré par la référence TN. Chaque tronçon présente une largeur égale à la largeur temporelle d'une demi-impulsion du signal impulsionnel injecté dans la fibre optique 5 à tester. Chaque tronçon T1...Ti... TN est en outre centré autour d'une date t₁, ... tᵢ...t_{N} correspondant à un point de coordonnée z de ladite fibre optique à tester. Ainsi, pour une position de coordonnée z sur la fibre optique 5, z=v. t_{z}, avec v = c/(2.n), où n est l'indice de réfraction de la fibre optique, c est la vitesse de la lumière, v est la fréquence de l'onde optique, et le temps t_{z} correspond alors au temps aller-retour (z) d'une impulsion, décompté à partir du point de départ de l'impulsion jusqu'au point z de mesure.

L'écart entre deux points de mesure peut être aussi petit que 1 unité d'échantillonnage (glissement d'un intervalle). Cependant l'écart entre 2 mesures indépendantes (résolution spatiale) est considéré comme égal à la demi-largeur de l'impulsion. Ainsi, l'écart entre 2 points de mesure indépendants z(t1), z(t2) est égal à la largeur d'une demi impulsion.

Une deuxième étape du traitement numérique consiste ensuite calculer, par utilisation d'un algorithme de transformée de fourrier rapide FFT, le spectre de chaque tronçon T1 ...Ti... TN dudit signal numérisé. Ainsi, pour chaque tronçon T1 ...Ti... TN du signal numérisé on obtient un spectre fréquentiel. De tels spectres fréquentiels sont illustrés sur la Figure 3C pour les tronçons T1 et TN du signal découpé de la Figure 3B. Ces spectres fréquentiels permettent d'obtenir la fréquence du battement v_{Batt} = v_{A} +( v_{Bref} -v_{Bz}) et de déterminer la fréquence maximum du battement correspondant à chaque tronçon T1...Ti... TN. Une troisième étape consiste à répéter les deux premières étapes de découpage et utilisation de l'algorithme de transformée de fourrier rapide, et à moyenner les résultats afin d'obtenir un spectre interprétable, c'est-à-dire dont on peut déterminer le maximum. Il s'agit de réaliser la moyenne des courbes FFT pour déterminer le maximum le plus précisément possible. On utilise par exemple un algorithme d'ajustement Gaussien ou de Lorentz. Cette étape peut être vue comme facultative mais les signaux traités étant bruités, elle est, dans la pratique, nécessaire.

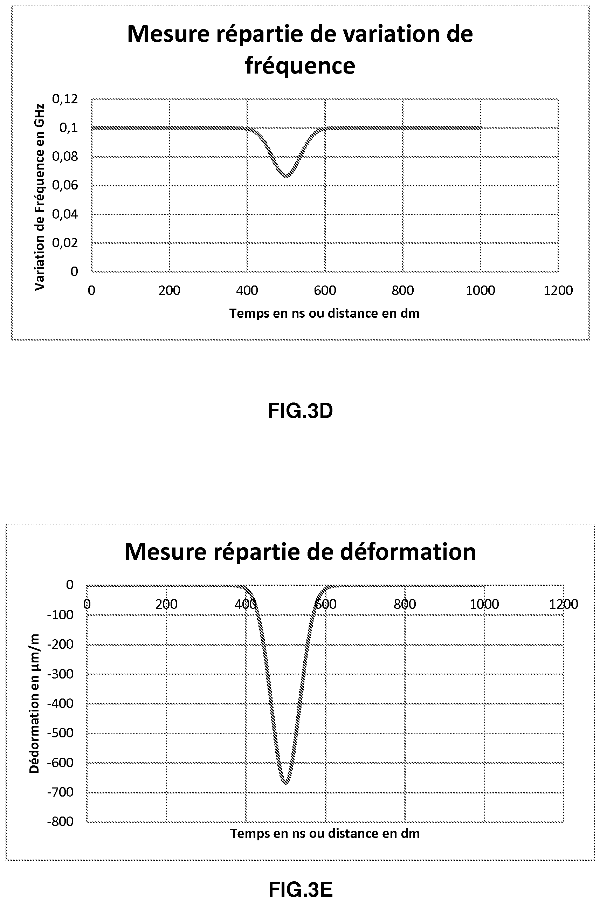

La quatrième étape du traitement numérique consiste ensuite à déterminer les positions fréquentielles des maximas correspondant aux résultats des algorithmes d'ajustement, en fonction des coordonnées z des différents points de la fibre optique 5, et à tracer un graphe de la mesure répartie de variation de fréquence tout le long de la fibre optique 5. Un tel graphe est représenté sur la Figure 3D, sur lequel on observe une variation de fréquence à la durée t=500ns, correspondant à la zone d'événement du tronçon TN de la Figure 3B.

Enfin, une dernière étape du traitement numérique consiste à appliquer les coefficients de sensibilité, respectivement de température C_{T} et de déformation CE, propres à la fibre optique 5, pour obtenir un résultat respectivement en termes de mesure répartie de température et de déformation. La Figure 3E représente un graphe obtenu après application du coefficient CE de sensibilité à la déformation et permettant d'obtenir la mesure répartie de déformation ε tout le long de la fibre optique. Ainsi, sur ce graphe, on constate que la fibre optique analysée est déformée de 680µm/m au point z correspondant à la durée t de 500ns. Le coefficient CE de sensibilité à la déformation est typiquement de 0,05MHz/(µm/m)) et le coefficient de sensibilité à la température C_{T} est typiquement 1MHz/°C.

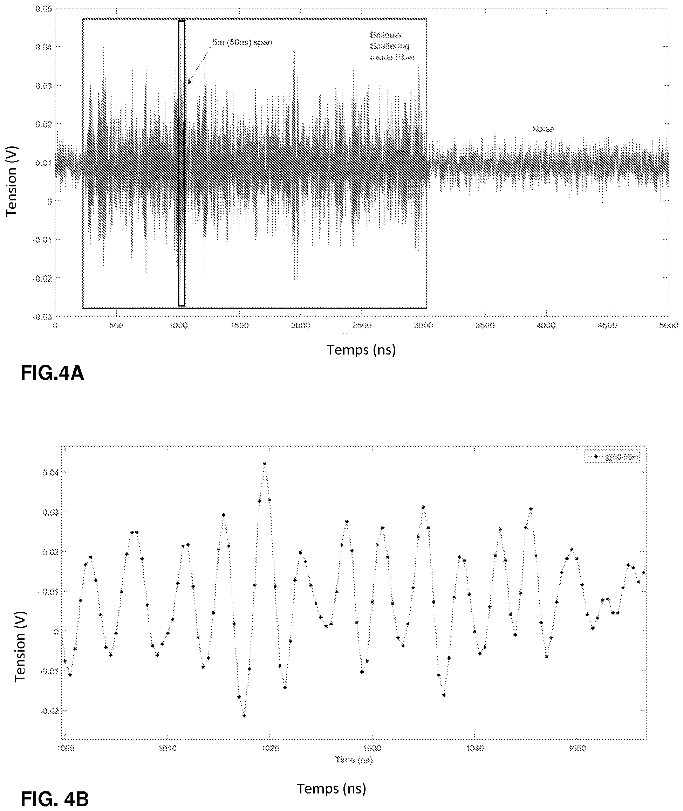

Les Figures 4A à 4C présentent des mesures réelles réalisées à partir de l'invention.

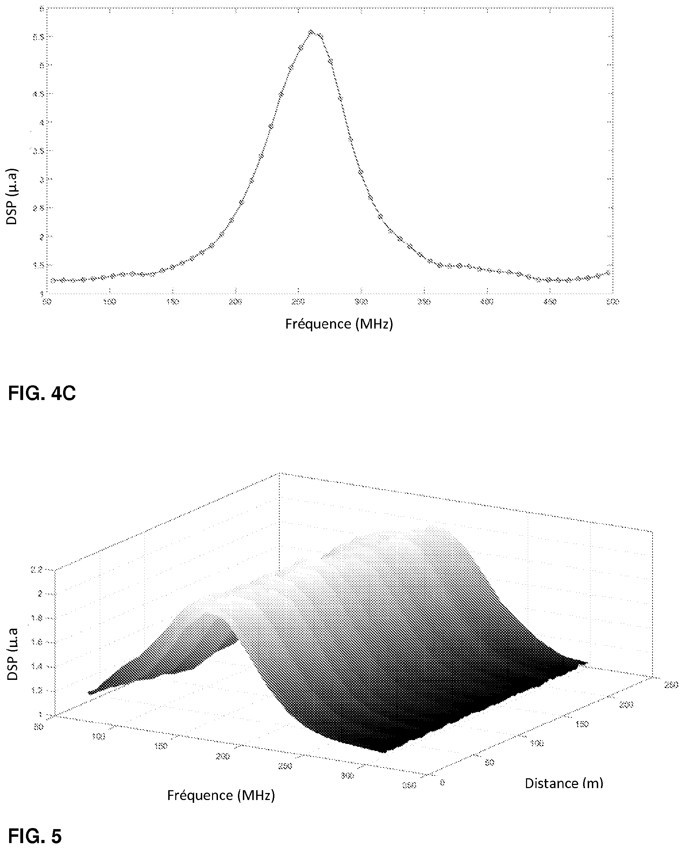

La figure 4A montre une trace temporelle acquise directement à la sortie du photo-détecteur. Celle-ci présente une modulation aléatoire (contrairement à la figure 3A, explicative), mais contient, comme le montre la figure 4B, une composante quasi-sinusoïdale correspondant à la diffusion Brillouin. La figure 4C montre que le spectre moyenné de la portion temporelle, présentée en 4B, est tel que décrit dans par la figure explicative 2C. La Figure 5 présente l'ensemble des spectres de diffusion Brillouin sur une fibre de longueur d'environ 250m. La Figure 6 présente le résultat de mesure répartie, à savoir, l'ensemble des maxima des spectres de la figure 5.

Les fibres utilisées sont des fibres monomodes, typiquement des fibres G652 type Coring® - SMF-28 ™, d'indice typiquement 1.45, de diamètre de cœur 9µm, gaine optique 125µm, gaine mécanique 250µm. La longueur peut être de moins d'1km, jusqu'à plus de 50km.

L'invention permet une suppression de tous les composants électroniques analogiques, excepté le photo-détecteur 9 et permet leur remplacement par un numériseur 11 et un module de traitement numérique 12. Ainsi, on s'affranchit des niveaux de bruit apportés par les composants actifs analogiques tels que les amplificateurs ou les oscillateurs par exemple. De plus, le traitement du signal étant entièrement numérique, les traitements sont moins consommateurs d'énergie et le dispositif présente un encombrement réduit, si bien qu'il peut être embarqué. Il peut donc avantageusement être alimenté en basse tension, typiquement en 12 ou 24 Volts, à partir d'une batterie. Cette batterie peut en outre être rechargeable, par un panneau solaire isolé par exemple, dont le besoin de puissance est de l'ordre de 100 Watt continu.

De plus le dispositif permet d'utiliser un module de calcul numérique 12 permettant d'effectuer des traitements en parallèle pour chaque tronçon ce qui réduit le temps de mesure à la durée d'acquisition, par exemple pour 10km de fibre on pourra avoir 10000 acquisitions par seconde avec une fréquence d'horloge du processeur de 10KHz et ainsi obtenir 10000 moyennes. Le module de calcul numérique comporte avantageusement processeur graphique de type GPU (Graphical Processing Unit) afin de déporter le calcul hautement parallélisable sur celui-ci. Ainsi, le calcul est réalisé en parallèle de l'acquisition et la durée d'une mesure correspond au temps d'acquisition. Ce temps d'acquisition est faible par rapport au temps d'acquisition des dispositifs de l'art antérieur. A titre d'exemple, pour une fibre de 10km, avec une fréquence d'horloge du processeur de 10Khz, on réalise 10000 acquisitions en une seconde ce qui permet d'avoir 10000 moyennes alors que dans l'état de la technique la durée d'une mesure est supérieure à une minute pour 10km.

## Revendications

1. Procédé de traitement numérique d'un signal issu d'un dispositif optoélectronique de mesure répartie par diffusion Brillouin comprenant une source de lumière (1) continue émettant un signal lumineux continu à une première fréquence vo, un coupleur (2) apte à diviser ledit signal lumineux continu en deux signaux identiques répartis dans deux bras, le premier bras comprenant un dispositif générateur d'impulsions décalées en fréquence (30) comprenant au moins un modulateur acousto-optique (3) apte à transformer ledit signal continu en un signal impulsionnel, de fréquence vp, destiné à être injecté dans une fibre optique (5) à tester pour qu'elle émette en retour un signal par rétrodiffusion Brillouin spontanée à une fréquence vF égale à vp - vBz, où vBz est la fréquence Brillouin à mesurer en tout point z de ladite fibre optique (5), et le deuxième bras formant un oscillateur local (16) émettant un autre signal lumineux destiné à être mélangé audit signal retour émis par rétrodiffusion Brillouin par ladite fibre optique (5) à tester pour permettre un abaissement de la fréquence dudit signal retour, de manière à ce qu'un module de détection (9) puisse détecter ladite fréquence de décalage Brillouin vBz en tout point z de ladite fibre optique et qu'un module de traitement (12) puisse relier cette fréquence de décalage Brillouin vBz en tout point z de ladite fibre optique à une valeur de température et une valeur de déformation, **dans lequel** l'oscillateur local (16) comprend une fibre optique de référence (18) ayant une fréquence de Brillouin identique ou proche de celle de la fibre optique (5) à tester, ladite fibre optique de référence (18) émettant un signal par rétrodiffusion Brillouin spontanée, en réponse audit signal lumineux continu émis dans ledit deuxième bras par ladite source lumineuse (1), ledit signal de rétrodiffusion Brillouin étant émis à une fréquence V_{OL} = v0 - v_{BRef}, où v_{BRef} est la fréquence de Brillouin de la fibre de référence sans déformation et à une température de référence ; **caractérisé en ce que le procédé comporte les étapes suivantes** :
a) numériser un signal correspondant au battement entre un signal rétrodiffusé issu de la fibre optique (5) à tester et un signal rétrodiffusé issu de la fibre optique (18) de référence, et détecté par un photo-détecteur (9),
b) découper ledit signal numérisé en une pluralité de tronçons (T1...Ti...TN) par application d'une fenêtre temporelle glissante de type fenêtre rectangulaire ou de Hamming, ou de Hann ou de Blackman-Harris, chaque tronçon présentant une largeur égale à la largeur temporelle d'une demi impulsion du signal impulsionnel injecté dans la fibre optique (5) à tester, la largeur de chaque tronçon étant en outre centrée autour d'une date t correspondant à un point de coordonnée z de ladite fibre optique (5) à tester,
c) calculer, par utilisation d'un algorithme de transformée de Fourier rapide FFT, le spectre fréquentiel de chaque tronçon (T1 ...Ti...TN) dudit signal numérisé;
d) répéter les étapes a), b) et c) et moyenner les spectres obtenus pour chaque point z de ladite fibre optique à tester ;
e) à l'aide des résultats obtenus à l'étape précédente, tracer un graphe de la variation de fréquence répartie mesurée en fonction du temps aller et retour tz de rétrodiffusion,
f) appliquer un coefficient de sensibilité à la température d'une part et un coefficient de sensibilité à la déformation d'autre part, sur ledit graphe obtenu de variation de fréquence répartie mesurée, afin d'obtenir respectivement un résultat en termes de mesure répartie en température ou un résultat en termes de mesure répartie en déformation.

2. Procédé de traitement numérique selon la revendication 1, **caractérisé en ce que** ledit traitement numérique est réalisé par un processeur graphique de type GPU ou Graphical *Processing* Unit en parallèle de l'acquisition.

3. Procédé de traitement numérique selon l'une des revendications 1 ou 2, pour lequel, la fibre optique de référence (18) a une fréquence de Brillouin identique ou une fréquence proche de celle de la fibre optique (5) à tester à savoir présentant un écart de fréquence, inférieur à 50 MHz et de façon préféré un écart inférieur à 20 MHz.

4. Procédé de traitement numérique selon l'une quelconque des revendications 1 à 3, pour lequel la bande passante du battement est limitée à moins de 1GHz, de préférence à moins de 500 MHz, et de préférence dans une bande centrée autour de 200MHz, par un photo-détecteur (9), capable de détecter ledit battement entre le signal rétrodiffusé issu de la fibre optique (5) à tester et le signal rétrodiffusé issu de la fibre optique (18) de référence, et le signal numérisé est le signal de battement détecté par ledit photo-détecteur (9), la numérisation étant faite par un convertisseur analogique - numérique (11).

5. Procédé de traitement numérique selon l'une quelconque des revendications 1 à 4, pour lequel le bruit d'intensité optique apporté par la diffusion Brillouin dans la fibre de référence est éliminé par un filtre électrique (21) basse fréquence disposé après le photo-détecteur (9).

6. Procédé de traitement numérique selon l'une quelconque des revendications 1 à 5, pour lequel les impulsions sont décalées en fréquence par un décalage de fréquence supérieur à 100MHz et de préférence un décalage de 200MHz à 300MHz réalisé par le modulateur acousto-optique (3).

7. Procédé de traitement numérique selon l'une quelconque des revendications 1 à 6, pour lequel le dispositif optoélectronique de mesure répartie par diffusion Brillouin étant embarqué, son alimentation est une alimentation en basse tension, de préférence en 12 ou 24 Volts, à partir d'une batterie.

8. Procédé de traitement numérique selon l'une quelconque des revendications 1 à 7, pour lequel le dispositif réalise un filtrage optique passe bande de 10GHz ou moins de 10GHz en sortie de l'oscillateur local (16) afin de laisser passer uniquement la fréquence v₀ - v_{Bref}.

9. Procédé de traitement numérique selon l'une quelconque des revendications 1 à 8, pour lequel le dispositif permet en sortie de l'oscillateur local (16), un brouillage de polarisation, suivi d'une atténuation variable permettant de fixer le niveau de signal de l'oscillateur local (50).

10. Procédé de traitement numérique selon l'une quelconque des revendications 1 à 9, pour lequel la source de lumière (1) est matérialisée par un laser utilisant un réseau de Bragg.

11. Procédé de traitement numérique selon l'une quelconque des revendications 1 à 10, pour lequel la source de lumière (1) émet une raie d'onde lumineuse centrée sur une longueur d'onde d'émission λ₀ et dont la largeur est au plus de 1 MHz.

## Patentansprüche

1. Verfahren zur digitalen Verarbeitung eines Signals aus einer optoelektronischen Vorrichtung zur verteilten Messung mittels Brillouin-Streuung, umfassend eine kontinuierliche Lichtquelle (1), die ein kontinuierliches Lichtsignal mit einer ersten Frequenz v₀ sendet, einen Koppler (2), der imstande ist, das kontinuierliche Lichtsignal in zwei identische, in zwei Armen verteilte Signale zu trennen, wobei der erste Arm eine Vorrichtung zur Erzeugung von frequenzverschobenen Impulsen (30) umfasst, umfassend mindestens einen akustooptischen Modulator (3), der imstande ist, das kontinuierliche Signal in ein Impulssignal mit der Frequenz vp umzuwandeln, das zum Einspeisen in eine zu testende optische Faser (5) bestimmt ist, damit diese auf dem Rückweg ein Signal durch spontane Brillouin-Rückstreuung mit einer Frequenz vF gleich vp - vBz sendet, wobei vBz die an jedem Punkt z der optischen Faser (5) zu messende Brillouin-Frequenz ist, und der zweite Arm einen lokalen Oszillator (16) bildet, der ein anderes Lichtsignal sendet, das zum Mischen mit dem durch von der zu testenden optische Faser (5) gesendeten Rücksignal bestimmt ist, um eine Senkung der Frequenz des Rücksignals zu gestatten, so dass ein Detektionsmodul (9) die Brillouin-Frequenzverschiebung vBz an jedem Punkt z der optischen Faser ermitteln kann und ein Verarbeitungsmodul (12) diese Brillouin-Frequenzverschiebung vBz an jedem Punkt z der optischen Faser mit einem Temperaturwert und einem Verformungswert verbinden kann, wobei der lokale Oszillator (16) eine optische Referenzfaser (18) mit einer identischen oder ähnlichen Brillouin-Frequenz wie die zu testende optische Faser (5) umfasst, wobei die optische Referenzfaser (18) als Antwort auf das kontinuierliche Lichtsignal, das in dem zweiten Arm von der Lichtquelle (1) gesendet wird, ein Signal durch spontane Brillouin-Rückstreuung sendet, wobei das Brillouin-Rückstreuungssignal mit einer Frequenz V_{OL} = V₀ - v_{Bref} gesendet wird, wobei V_{Bref} die Brillouin-Frequenz der Referenzfaser ohne Verformung und mit einer Referenztemperatur ist; **dadurch gekennzeichnet, dass** das Verfahren die folgenden Schritte aufweist:
a) Digitalisieren eines Signals, das der Schwebung zwischen einem rückgestreuten Signal aus der zu testenden optischen Faser (5) und einem rückgestreuten Signal aus der optischen Referenzfaser (18) und von einem Photodetektor (9) emittelten Signal entspricht,
b) Zerschneiden des digitalisierten Signals in eine Vielzahl von Abschnitte (T1...Ti...TN) durch Anwendung eines gleitenden Zeitfensters vom Typ rechteckiges oder Hamming- oder Hann- oder Blackman-Harris-Fenster, wobei jeder Abschnitt eine Breite aufweist, welche der zeitlichen Breite eines halben Impulses des in die zu testende optische Faser (5) eingespeisten Impulssignals entspricht, wobei die Breite jedes Abschnitts ferner um einen Zeitpunkt t zentriert ist, welcher einem Koordinatenpunkt z der zu testenden optischen Faser (5) entspricht,
c) Berechnen, durch Verwendung eines Algorithmus einer schnellen Fouriertransformation FFT, des Frequenzspektrums jedes Abschnitts (T1...Ti...TN) des digitalisierten Signals;
d) Wiederholen der Schritte a), b) und c) und Mitteln der für jeden Punkt z der zu testenden optischen Faser erhaltenen Spektren;
e) mit Hilfe der im vorangegangenen Schritt erhaltenen Ergebnisse, Zeichnen einer Kurve der in Abhängigkeit von der Rückstreuungs-Hin- und Rückzeit tz gemessenen verteilten Frequenzschwankung,
f) Anwenden zum einen eines Temperatursensibilitätskoeffizienten und zum anderen eines Verformungssensibilitätskoeffizienten auf die erhaltene verteilte Frequenzschwankungsmesskurve, um jeweils ein Ergebnis hinsichtlich verteilter Temperaturmessung oder ein Ergebnis hinsichtlich verteilter Verformungsmessung zu erhalten.

2. Digitales Verarbeitungsverfahren nach Anspruch 1, **dadurch gekennzeichnet, dass** die digitale Verarbeitung von einem Grafikprozessor vom Typ GPU oder Graphical Processing Unit parallel zur Erfassung durchgeführt wird.

3. Digitales Verarbeitungsverfahren nach einem der Ansprüche 1 oder 2, wobei die optische Referenzfaser (18) eine identische Brillouin-Frequenz oder eine Frequenz hat, die ähnlich der der zu testenden optischen Faser (5) ist, nämlich einen Frequenzabstand von unter 50 MHz und bevorzugt einen Abstand von unter 20 MHz aufweist.

4. Digitales Verarbeitungsverfahren nach einem der Ansprüche 1 bis 3, wobei die Bandbreite der Schwebung auf unter 1 GHz, vorzugsweise auf unter 500 MHz, und vorzugsweise in einem Band, zentriert auf um 200 MHz, durch einen Photodetektor (9) begrenzt ist, der in der Lage ist, die Schwebung zwischen dem rückgestreuten Signal aus der zu testenden optischen Faser (5) und dem rückgestreuten Signal aus der optischen Referenzfaser (18) zu ermitteln, und das digitalisierte Signal das von dem Photodetektor (9) ermittelte Schwebungssignal ist, wobei die Digitalisierung durch einen Analog-Digital-Wandler (11) erfolgt.

5. Digitales Verarbeitungsverfahren nach einem der Ansprüche 1 bis 4, wobei das durch die Brillouin-Streuung in die Referenzfaser eingebrachte optische Intensitätsrauschen durch einen elektrischen Niederfrequenzfilter (21) beseitigt wird, der nach dem Photodetektor (9) angeordnet ist.

6. Digitales Verarbeitungsverfahren nach einem der Ansprüche 1 bis 5, wobei die Impulse durch einen Frequenzverschiebung von über 100 MHz und vorzugsweise eine Verschiebung von 200 MHz bis 300 MHz, durchgeführt durch den akustooptischen Modulator (3), frequenzverschoben werden.

7. Digitales Verarbeitungsverfahren nach einem der Ansprüche 1 bis 6, wobei, wobei die optoelektronische Vorrichtung zur verteilten Messung mittels Brillouin-Streuung eingebaut ist, ihre Versorgung eine Niederspannungsversorgung vorzugsweise von 12 oder 24 Volt aus einer Batterie ist.

8. Digitales Verarbeitungsverfahren nach einem der Ansprüche 1 bis 7, wobei die Vorrichtung eine optische Bandbreitenfilterung von 10 GHz oder unter 10 GHz am Ausgang des lokalen Oszillators (16) durchführt, um nur die Frequenz v₀ - v_{Bref} hindurchzulassen.

9. Digitales Verarbeitungsverfahren nach einem der Ansprüche 1 bis 8, wobei die Vorrichtung am Ausgang des lokalen Oszillators (16) eine Polarisierungsverwürfelung, gefolgt von einer variablen Dämpfung gestattet, wodurch erlaubt wird, das Signalniveau des lokalen Oszillators (50) festzulegen.

10. Digitales Verarbeitungsverfahren nach einem der Ansprüche 1 bis 9, wobei die Lichtquelle (1) durch einen Laser materialisiert ist, der ein Bragg-Gitter verwendet.

11. Digitales Verarbeitungsverfahren nach einem der Ansprüche 1 bis 10, wobei die Lichtquelle (1) einen Lichtwellenstrahl sendet, der auf eine Sendewellenlänge λ₀ zentriert ist und dessen Breite höchstens 1 MHz beträgt.

## Claims

1. A method for digitally processing a signal derived from a optoelectronic device for measurement distributed by Brillouin scattering comprising a continuous light source (1) emitting a continuous light signal at a first frequency *v*0, a coupler (2) able to divide said continuous light signal into two identical signals distributed in two arms, the first arm comprising a frequency-shifted pulse generator device (30) comprising at least one acousto-optical modulator (3) able to transform said continuous signal into a pulse signal, of frequency vp, intended to be injected into an optical fiber (5) to be tested so that it emits in response a signal by spontaneous Brillouin backscattering at a frequency vF equal to vp-vBz, where vBz is the Brillouin frequency to be measured at every point z of said optical fiber (5), and the second arm forming a local oscillator (16) emitting another light signal intended to be mixed with said return signal emitted by Brillouin backscattering by said optical fiber (5) to be tested to allow a lowering of the frequency of said return signal, so that a detection module (9) can detect said Brillouin shift frequency vBz at every point z of said optical fiber and so that a processing module (12) can link this Brillouin shift frequency vBz at every point z of said optical fiber at a temperature value and a deformation value, wherein the local oscillator (16) comprises a reference optical fiber (18) having a Brillouin frequency identical or close to that of the optical fiber (5) to be tested, said reference optical fiber (18) emitting a signal by spontaneous Brillouin backscattering, in response to said continuous light signal emitted in said second arm by said light source (1), said Brillouin backscatter signal being emitted at a frequency *v*_{OL}=*v*0-*V*_{BRef}, where *V*_{BRef} is the Brillouin frequency of the reference fiber without deformation and at a reference temperature;
**characterized in that** the method includes the following steps:
a) digitizing a signal corresponding to the beat between a backscattered signal derived from the optical fiber (5) to be tested and a backscattered signal derived from the reference optical fiber (18), and detected by a photo-detector (9),
b) splitting said digitized signal into a plurality of sections (T1... Ti...TN) by applying a sliding time window of the rectangular or Hamming or Hann or Blackman-Harris window type, each section having a width equal to the time width of a half-pulse of the pulse signal injected into the optical fiber (5) to be tested, the width of each section being further centered around a date t corresponding to a point of coordinate z of said optical fiber (5) to be tested,
c) calculating, using a Fast Fourier Transform FFT algorithm, the frequency spectrum of each section (T1...Ti...TN) of said digitized signal;
d) repeating steps a), b) and c) and averaging the spectra obtained for each point z of said optical fiber to be tested;
e) using the results obtained in the previous step, drawing a graph of the distributed frequency variation measured as a function of the backscattering round trip time tz,
f) applying a temperature-sensitivity coefficient on the one hand and a deformation-sensitivity coefficient on the other hand, on said obtained graph of the measured distributed frequency variation, in order to obtain respectively a result in terms of temperature-distributed measurement or a result in terms of deformation-distributed measurement.

2. The digital processing method according to claim 1, **characterized in that** said digital processing is performed by a graphic processor of the type GPU or Graphical Processing Unit in parallel with the acquisition.

3. The digital processing method according to any of claims 1 or 2, for which, the reference optical fiber (18) has an identical Brillouin frequency or a frequency close to that of the optical fiber (5) to be tested, namely with a frequency deviation of less than 50 MHz and preferably a deviation of less than 20 MHz.

4. The digital processing method according to any one of claims 1 to 3, for which the bandwidth of the beat is limited to less than 1GHz, preferably less than 500 MHz, and preferably in a centered band around 200 MHz, by a photo-detector (9), capable of detecting said beat between the backscattered signal derived from the optical fiber (5) to be tested and the backscattered signal derived from the reference optical fiber (18), and the digitized signal is the beat signal detected by said photo-detector (9), the digitization being done by an analog-to-digital converter (11).

5. The digital processing method according to any one of claims 1 to 4, for which the optical intensity noise brought by the Brillouin scattering in the reference fiber is eliminated by a low-frequency electric filter (21) disposed after the photo-detector (9).

6. The digital processing method according to any one of claims 1 to 5, for which the pulses are frequency-shifted by a frequency shift greater than 100 MHz and preferably a shift ranging from 200 MHz to 300 MHz performed by the acousto-optical modulator (3).

7. The digital processing method according to any one of claims 1 to 6, for which the optoelectronic device for measurement distributed by Brillouin scattering being on-board, its supply is a low-voltage supply, preferably with 12 or 24 volts, from a battery.

8. The digital processing method according to any one of claims 1 to 7, for which the device performs an optical bandpass filtering of 10 GHz or less than 10 GHz at the output of the local oscillator (16) in order to let pass only the frequency *v*0-*v*_{Bref}.

9. The digital processing method according to any one of claims 1 to 8, for which the device enables, at the output of the local oscillator (16), a polarization scrambling, followed by variable attenuation allowing to fix the signal level of the local oscillator (50).

10. The digital processing method according to any one of claims 1 to 9, for which the light source (1) is materialized by a laser using a Bragg grating.

11. The digital processing method according to any one of claims 1 to 10, for which the light source (1) emits a centered light wave line on an emission wavelength λ₀ and whose width is at most 1 MHz.
